# EUROPEAN PATENT APPLICATION

(11) **EP 1 980 610 A1**
(43) Date of publication of application: **15.10.2008**
(21) Application number: 07105561.0
(22) Date of filing: 03.04.2007
(51) Int. Cl.: C11B 3/06, C11B 13/04, C11C 3/00

(54) **A method for treating a mixture containing an ester compound, a chemical processing equipment, a mixture containing an ester compound and a composition of ester compunds**

(71) Applicant: Lindquist, Carl-Johan, 703 58 Örebro (SE)
(72) Inventor: Lindquist, Carl-Johan, 703 58 Örebro (SE)
(74) Representative: Reyier, Ann-Mari

(57) **Abstract**

The invention relates to a method of treating a mixture (5) containing at least one ester compound having at least one ester bond, in order to enable a dissociation of the ester bond and a re-esterification of the ester compound. The invention also relates to a chemical processing equipment (1) and a mixture (5) containing an ester compound.

## Description

### TECHNICAL FIELD

The invention relates to a method of treating a mixture containing at least one ester compound having at least one ester bond, in order to enable a dissociation of the ester bond and a re-esterification of the ester compound. The invention further relates to a chemical processing equipment, a mixture containing at least one ester compound, and a composition of ester compounds.

### PRIOR ART

For several centuries it has been known to hydrolyze fatty acid ester compounds with the use of NaOH and KOH in a process known as saponification, in which the acid and alcohol of the ester are dissociated. However, in some instances it is desired to re-esterify the ester rather than hydrolyzing the ester. A re-esterification comprises substituting the alcohol in the ester with another alcohol. In these instances the use of a hydrolyzing step is undesirable, since it may be difficult to control which alcohol reacts with the acid and because of the inevitable presence of water.

One application in which a re-esterification of an ester is desired is when producing a bio-diesel from high-quality vegetable oils. By substituting the glycerol with a low carbon alcohol a bio-diesel usable for combustion may be obtained in an environmentally friendly way.

In patent document SE 9100243, a re-esterification method is shown involving Ca as a catalyst for the reaction, which has been proven far more effective than the previous use of an Na-based catalyst. However, one drawback is that only very pure samples of vegetable oils have hitherto been possible to re-esterify with the method.

### SUMMARY OF THE INVENTION

One object of the invention is to enable a simple and efficient re-esterification of a wider selection of ester mixtures.

According to a first aspect of the invention this object is achieved with the method according to claim 1. According to a second aspect of the invention this object is achieved with the chemical processing equipment according to claim 13. According to a third aspect of the invention this object is achieved with the mixture according to claim 17.

By pre-treating the mixture containing at least one ester with at least one preparatory agent before initiation of the re-esterification reaction, which preparatory agent is selected from the group consisting of elements from group II of the periodic table and compounds including at least one element from group II of the periodic table, it has with this invention unexpectedly been found that a reductoion of inhibitory effects from impurities on the re-esterification reaction is achieved. It is believed that the preparatory agent reacts with the impurities so that the impurities becomes bonded to the preparatory agent, and thus cannot interfere with the re-esterification reaction. Hence a larger selection of mixtures containing higher levels of impurities may be re-esterified. It has been found that the pre-treatment with a preparatory agent enables re-esterification of both more difficult esters and of esters in mixtures containing larger amounts of impurities.

According to one embodiment the invention comprises pre-treating the mixture with the preparatory agent for at least fifteen minutes, preferably for at least sixty minutes, and most preferably for at least ninety minutes, before the initiation of the re-esterification of the ester. It has been found that the pre-treating of the ester mixture increases in efficiency with time until at least a period of time has passed. It is therefore advantageous to let the pre-treatment take place for at least a minimum period of time. Preferably the invention comprises pre-treating the mixture with the preparatory agent for no longer than two hours. Pre-treatment for a longer period will in most cases have only a very small effect.

According to one embodiment of the invention at least one preparatory agent is selected from the group consisting of monoxides of an element from group II of the periodic table. It has been found that pre-treatment with monoxides of elements from group II of the periodic table have an advantageous effect on the binding of water in the mixture, which water my adversely affect the re-esterification reaction.

According to one embodiment of the invention at least one preparatory agent is a Lewis base, wherein the preparatory agent binds acidic impurities. It has been found that acids have an adverse effect on the re-esterification reaction and are common in many different types of ester mixtures as impurities. Furthermore, a more basic environment improves the efficiency of the re-esterification reaction. Hence the addition of a Lewis base increases the efficiency of the re-eserification reaction.

According to one embodiment of the invention at least one preparatory agent is selected from the group consisting of hydroxides of an element from group II of the periodic table. A hydroxide of an element from group II of the periodic table is basic and will react with acidic impurities and will invoke a more basic environment. The element II hydroxide may also form salts with acids present in the mixture, which salts have low solubilities in the ester mixture, and are therefore precipitated from the mixture.

According to one embodiment the invention comprises pre-treating the mixture in a first step with a preparatory agent selected from the group of monoxides of an element from group II of the periodic table, and pre-treating the mixture in a second, subsequent step with a preparatory agent selected from the group of hydroxides of an element from group II of the periodic table. When pre-treating the mixture with a monoxide, the monoxide reacts with water so that the water is removed under the production of a hydroxide. The hydroxide is then in turn effective in removal of acids as described above. Hence a smaller amount of hydroxide needs to be added to the mixture, since the monoxide will act twice. If the amount of water in the mixture is larger that the amounts of acids, it may be sufficient to only add monoxide to the mixture.

According to one embodiment of the invention at least one preparatory agent is selected from the group consisting of Calcium compounds. Calcium is the least expensive of the group II elements and will therefore enable the most economical pre-treatment of the mixture. It is also believed that Ca has better properties for treating the mixture than the other elements of group II. Preferably at least one preparatory agent is selected from the group comprising CaO and Ca(OH)₂.

According to one embodiment the invention comprises adding a re-esterification alcohol to the mixture, and re-esterifying the ester compound by dissociating the ester bond, wherein the ester compound is divided into at least one ester acid and an ester alcohol, and reacting the ester acid with the re-esterification alcohol to form a new, re-esterified ester.

According to one embodiment the invention comprises re-esterfying a triacylglycerol. It has been found that triacylglycerol is particularly suited for re-esterification after the pre-treatment according to the invention. Preferably the re-esterification alcohol is selected from the group consisting of methanol and ethanol, since a very efficient production of environmentally friendly bio-diesel is then allowed, which bio-diesel may be used for combustion or other uses. Preferably the invention comprises using a catalyst for catalyzing the re-esterification reaction, which catalyst is selected from the group consisting of elements from group II of the periodic table and compounds formed of elements from group II of the periodic table. Preferably the catalyst is Ca.

According to one embodiment of the invention at least a mayor amount of the ester in the mixture is selected from the group consisting of frying oils and animal fats. Frying oils and animal fats contains large amounts of impurities disturbing the re-esterification reaction to give low yields and low reaction rates. By pre-treating a mixture containing frying oils and/or animal fats the impurities are removed, precipitated, bonded or otherwise inhibited, so that the re-esterification reaction becomes much more efficient. Hence more sources of triacylglycerides may be used for the production of bio-diesel, such as used frying oils from restaurants and animal fat from slaughter houses, which may provide large amounts of inexpensive triacylglycerides. Before the invention re-esterification of frying oils and animal fats was not economically feasible for production of bio-diesel, due to the technical difficulties of re-esterification. One reason for the previous inability of re-esterifying triacylglycerides from used frying oils and animal fats, is their high content of impurities, such as water and conservative agents in frying oils, which are usually acidic compounds, and especially water in animal fats, which may hydrolyze the ester instead of allowing a controlled re-esterification.

According to one embodiment the invention comprises re-esterifying the ester compound in a reactor having an area to volume ratio larger than or equal to 1, preferably larger than or equal to 1.5, and most preferably larger than or equal to 2. During the beginning of the re-esterification the reaction mixture becomes divided into a low polarity phase and a high polarity phase, wherein the reactants are present in different phases. The use of a large area to volume ratio for the reactor allows a larger contact area between the two phases, and hence the reactants, so that a higher reaction rate is achieved.

According to one embodiment the invention comprises re-esterifying the ester compound in a reactor, and turning the reaction container around at least one axis of rotation in order to decant the reaction products. Some reaction products from the re-esterification reaction are not miscible and form different phases. By turning the reactor the products can be decanted from the reactor so that the products both are removed from the reactor and becomes separated from each other. Preferably the reactor is adapted to turn around a substantially horizontal axis of rotation.

According to one embodiment the invention comprises re-esterifying the ester in a liquid state. The rate of reaction is appreciably higher if the ester compound is present in a liquid state. According to one embodiment the ester may be provided in a solvent. Preferably the solvent is an organic solvent. In a preferred embodiment however, the method comprises re-esterifying the ester compound in a temperature above the melting point of the ester compound. Preferably the invention comprises re-esterifying the ester in a temperature between 10 - 60 °C, preferably between 15 - 55 °C, and most preferably between 20 - 50 °C, depending on the ester to be re-esterified.

According to one embodiment of the invention the mixture contains at least 80 % by weight of ester compounds, preferably at least 90 % (w/w), and most preferably at least 96 % (w/w). Preferably the mixture contains at least 80 % (w/w), preferably at least 90 % (w/w), and most preferably at least 96 % (w/w) of triacylglycerides. Preferably the mixture contain at least 80 % by weight, preferably at least 90 % (w/w), and most preferably at least 96 % (w/w) of an ester compound selected from the group consisting of animal fats and frying oils.

According to one embodiment of the invention the mixture contain at least 0.001 % by weight, preferably at least 0.005 % (w/w), and most preferably at least 0,01 % (w/w) of the preparatory agent during the pre-treatment. According to one embodiment of the invention the mixture contain at the most 14 % by weight, preferably at the most 10 % (w/w), and most preferably at the most 5 % (w/w) of the preparatory agent during the pre-treatment of the mixture. Preferably the mixture predominantly contains the ester compound or compounds and the preparatory agent or agents, and the remaining being possible impurities. Preferably the ester compound is provided in a mixture containing less than 5 % by weight, preferably less than 3 % (w/w), and most preferably less than 1 % (w/w) of a solvent. Preferably, the ester compound is provided in an as pure state as is commercially and/or technically feasible, preferably in accordance with the standard SS-EN 14214.

According to a fifth aspect of the invention the object is achieved with a composition of ester compounds, wherein the composition of ester compounds is obtained from re-esterification of esters selected from the group of animal fats and frying oils, with the alcohol selected from the group of methanol and ethanol. The composition constitutes an environmentally friendly diesel-oil obtainable from inexpensive raw materials. The composition may be used for combustion or other uses for diesel-oils.

### DESCRIPTION OF THE DRAWINGS

The invention is now to be described in more detail as nonlimiting examples of the invention and with reference to the attached drawings, in which:
- Fig. 1: shows a chemical processing equipment for performing the method according to one example of the invention, and
- Fig. 2: shows one example of a method according to the invention, which may be performed with the processing equipment in fig. 1.

### DETAILED DESCRIPTION

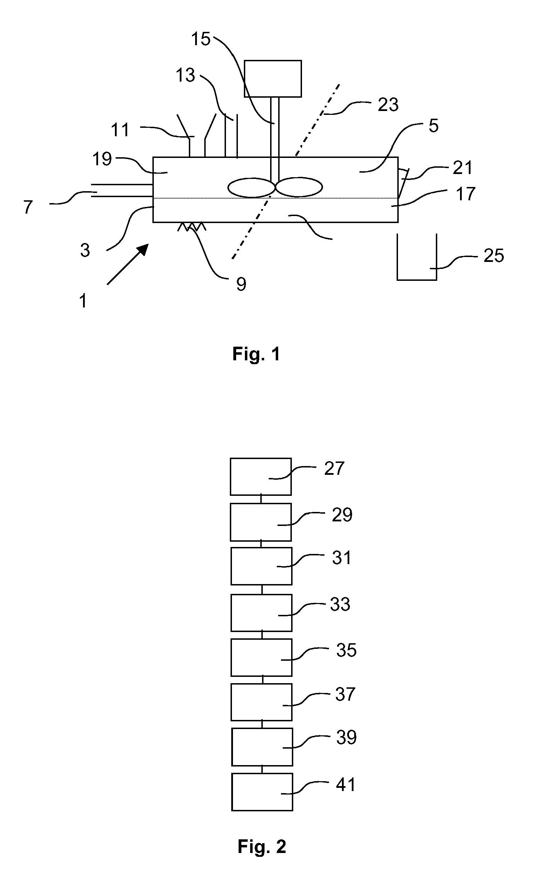

In fig. 1 a chemical processing equipment 1 according to one example of the invention is shown. The chemical processing equipment 1 comprises a reactor 3 adapted to contain a mixture 5 containing at least one ester compound having an ester bond, for enabling a re-esterification of the ester compound. During the re-esterification of the ester, the ester compound is dissociated into its ester acid and its ester alcohol, wherein the ester acid is induced to form a new ester bond with another, second alcohol.

According to one example of the invention the chemical processing equipment 1 comprises a first feeding arrangement 7 adapted to feed the mixture 5 containing the at least one ester compound into the reactor 3. In this example the first feeding arrangement 7 is also adapted to remove the re-esterified ester from the reactor 3 after the reaction. The chemical processing equipment 1 further comprises a temperature regulating arrangement 9, adapted to control the temperature of the mixture 5 to be above the melting point of the ester compound. Hence the mixture 5 is provided in a liquid state inside the reactor 5.

In this example the chemical processing equipment is adapted for treating a mixture 5 containing triacylglyceride to at least 80 % by weight. In this example the mixture 5 contains to at least 80 % by weight an ester selected from the group of frying oils or animal fats.

The chemical processing equipment 1 further comprises a second feeding arrangement 11 adapted to feed a preparatory agent to the mixture 3. The preparatory agent is selected from the group consisting of elements from group II of the periodic table and of compounds containing at least one element from group II of the periodic table. The preparatory agent is preferably a solid, and is preferably fed into the mixture 5 in powder form. The preparatory agent reacts with or binds impurities contained in the mixture 5, which impurities otherwise would have inhibited the re-esterification reaction. Hence a wider selection of mixtures 5 may be re-esterified through the invention, and with a better yield, reaction rate and/or economic result. In this example the second feeding arrangement is adapted to feed at least one preparatory agent containing CaO to the reactor 3. The CaO reacts with any water present in the mixture to form Ca(OH)₂, wherein the water will not inhibit the re-esterification reaction. In this example the second feeding arrangement is further adapted to feed at least one preparatory agent containing Ca(OH)₂ to the reactor 3. The Ca(OH)₂ reacts with any acids in the mixture 5, which otherwise would inhibit the re-esterification reaction. In for example frying oils acids are often present in the form of conservatives.

The chemical processing equipment 1 further comprises a third feeding arrangement 13 adapted to feed a second, re-esterification alcohol to the mixture 5, which second alcohol is to react with the ester acid to form a new, re-esterified ester. In this example the third feeding arrangement 13 is adapted to feed an alcohol from the group of methanol and ethanol to the reactor 3. The chemical processing equipment 1 is hence adapted to enable a reaction between the acyl part of the triacylglycerides and the methanol and/or ethanol in order to form bio-diesel. With the invention it is hence possible to produce bio-diesel from inexpensive, used frying oils and from left-over animal fats.

The third feeding arrangement 13 is further adapted to feed a catalyst selected from the group of elements from group II of the periodic table and of compounds including at least one element from group II of the periodic table to the reactor 3. In this example the catalyst is solid Ca in powder form, suspended in the alcohol. The chemical processing equipment 1 further comprises a stirring arrangement 15, adapted to stir the mixture during the re-esterification reaction.

In this example the reactor 3 is shaped in an area to volume ratio, A/V, which is larger than or equal to 2 m⁻¹. At the beginning of the re-esterification reaction the reaction mixture 3 comprises a non-polar phase 17 containing the ester compound. Furthermore, the reactor 3 contains a second, polar phase 19 containing the second alcohol. Hence, in this example, two phases 17, 19 are developed inside the reactor. In order to increase the reaction rate it is advantageous that the area of the reactor 3, and hence the contact surface between the two phases 17, 19, is large.

During the course of the reaction the ester compound is dissociated into glycerol and fatty acids. Most of the fatty acids react with the alcohol to form a bio diesel. However, some of the fatty acids remain unreacted, and will eventually sink due to their weight. During the course of the re-esterification reaction three phases may develop, namely an ester phase containing the re-esterified ester, or in this example bio-diesel, a heavy glycerol phase, and a solid phase at the bottom of the reactor containing the catalyst and preparatory agent. Non-reacted alcohol may also be present in the ester and glycerol phases.

In this example the reactor 3 comprises an outlet 21, covered by a lid, for removal of products from the reactor 3. The reactor 3 is furthermore designed turnable around a horizontal axis 23, so that the outlet 21 may be lowered beneath the present level of chemicals inside the reactor 3. Hence it is possible to simply pour the contents of the reactor out from the outlet 21. Due to that some of the products obtained from the reaction form immiscible phases, it is easy to decant the contents of the reactor 3, so that the different phases become separated. The chemical processing equipment 1 further comprises a collection vessel 25, for collecting the different products. In another example the reactor may also comprise other means for removing the products from the reactor.

The invention is now to be described as one example of a method according to the invention for enabling re-esterification of an ester compound, and with reference to fig. 2.

In a first step 27 the method comprises feeding a mixture containing at least one ester compound having an ester bond into a reactor. In this example the mixture contains the ester compound to at least 80 % by weight, preferably to at least 90 % by weight and most preferably at least 96 % by weight. In this example the ester compound is selected from the group consisting of triacylglycerides. In this example the ester compound is selected from the group of animal fats and frying oils, but in another example the triacylglyceride may be any other type of oil or fat.

In a second step 29 the method comprises heating the ester compound above the melting point of the ester compound. In another example the ester may be a liquid at room temperature. In yet another example, in which the ester is solid at room temperature, the ester may be solved in a solvent, preferably an organic solvent. In any case the ester compound is preferably provided in a liquid state, wherein the re-esterification reaction may proceed more readily. In this example the method comprises holding the mixture at a temperature between 10 - 60 °C, preferably between 15 - 55 °C, and most preferably between 20 - 50 °C, during the re-esterification reaction.

In a third step 31 the method comprises pre-treating the mixture with at least one preparatory agent before initiation of the re-esterification reaction, which preparatory agent is selected from the group consisting of elements from group II of the periodic table and compounds including at least one element from group II of the periodic table. Such a preparatory agent reduces re-esterification reaction inhibiting effects from impurities. In this example the method comprises pre-treating the mixture with the preparatory agent for at least fifteen minutes, preferably for at least sixty minutes, and most preferably for at least ninety minutes, before initiation of the re-esterification of the ester.

In this example the third step 31 further comprises pre-treating the mixture in a first, pre-treatment step with a preparatory agent selected from the group of monoxides of an element from group II of the periodic table. In this example the method comprises pre-treating the mixture with a preparatory agent in the form of CaO. CaO reacts with water to form Ca(OH)₂, wherein any traces of water are removed from the mixture. Water may otherwise inhibit the re-esterification reaction since the water may hydrolyze the ester, and prevent it from re-esterification.

In this example, since a triacylglyceride from animal fat or frying oils cannot contain more than 4 % by weight of water, the method comprises adding preparatory agent, or CaO, to the mixture so that the mixture contains less than 14 % by weight of the preparatory agent, which is the stoichiometric amount of CaO to Ca(OH)₂. Depending on the amount of water in the mixture, which may be evaluated by distillation, the method comprises adding preparatory agent, or CaO, to the mixture, so that the mixture contains at least 0.001 % by weight of preparatory agent. In this example the mixture hence contains between 0.001 to 14 % by weight preparatory agent, but preferably between 0.005 - 8 %, and most preferably 0.01 - 4 % by weight preparatory agent in the form of CaO.

In a fourth step 33 the method comprises pre-treating the mixture in a second, subsequent, pre-treatment step with a preparatory agent selected from the group of hydroxides of an element from group II of the periodic table. In this example at least one preparatory agent is a Lewis base, wherein the preparatory agent binds acidic impurities. In this example the method comprises pre-treating the mixture with Ca(OH)₂. Ca(OH)₂ reacts with acids in the mixture to form a salt. Since salts are formed from ions, and ester compounds are mostly non-polar, the salt is likely to precipitate and be removed from the mixture. Furthermore, the Ca(OH)₂ invokes a more basic environment, which is preferred for the re-esterification reaction.

In the case that the amount of water in the mixture is low, the method comprises adding the Ca(OH)₂ to the mixture. However, in the case the amount of water in the mixture is high in relation to the amount of acids in the mixture, the Ca(OH)₂ formed in the preceding step may be sufficient for neutralizing the acid.

In this example the method comprises adding the second preparatory agent, or Ca(OH)₂, to the mixture so that the mixture contains less than 4 % by weight of the Ca(OH)₂ preparatory agent. Depending on the amount of acids in the mixture, which may be evaluated by titration, the method comprises adding preparatory agent, (Ca(OH)₂, or CaO forming Ca(OH)₂), to the mixture, so that the mixture contains at least 0.001 % by weight of the Ca(OH)₂ preparatory agent to the mixture. In this example the mixture hence contains between 0.001 to 4 % by weight of the second, preparatory agent, but preferably between 0.005 - 2 %, and most preferably between 0.01 - 1 % by weight preparatory agent in the form of Ca(OH)₂.

In a fifth step 35 the method comprises adding a re-esterification alcohol to the mixture. In this example the method comprises adding a re-esterification alcohol selected from the group consisting of methanol and ethanol to the mixture.

In the fifth step 35 the method also comprises adding a catalyst to the mixture, which catalyst catalyzes the re-esterification reaction and which is selected from the group consisting of elements from group II of the periodic table and compounds formed of elements from group II of the periodic table. In this example the method comprises adding solid Ca as a catalyst. By using Ca as catalyst the re-esterification reaction may be performed in a much lower temperature than is possible when using the traditional Na- or K-catalyst. Preferably the catalyst is mixed with the alcohol so that both are added to the reactor at the same time.

In a sixth step 37 the method comprises treating the mixture containing the at least one ester compound having at least one ester bond, in order to enable a re-esterification of the ester compound. In the sixth step 37, the ester compound is disassociated into an ester acid and an ester alcohol, in this example into fatty acids and glycerol. The sixth step 37 further comprises reacting the ester acid with the re-esterification alcohol to form a new, re-esterified ester. Hence, in this example, the methanol and/or ethanol added in the fifth step 35 will react with the fatty acids to form a new acylmethanol and/or acylethanol esters. Acylmethanol and acylethanol are known as diesel-oils, and thus a bio-diesel for combustion may be formed from used frying oils and animal fats, or from other kinds of triacylglycerides.

In the sixth step 37 the method comprises re-esterifying the ester in a reactor shaped with an area to volume ratio larger than or equal to 1, preferably larger than or equal to 1.5, and most preferably larger than or equal to 2. Due to the poor miscibility between the triacylglycerides and alcohol, two phases are formed inside the reactor. By providing a large horizontal area, a large surface area between the ester phase and the alcohol phase is achieved, which greatly improves the reaction rate. In the sixth step 37 the method further comprises stirring the contents of the reactor, that is, the mixture and the added alcohol, to enhance the contact between the reactants. During the re-esterification a new composition of ester compounds is obtained containing an alcohol selected from the group of methanol and ethanol, and acids obtained from the re-esterification of esters selected from the group of animal fats and frying oils.

In a seventh step 39 the method comprises removing the products from the reactor. The products formed are not miscible with each other and therefore form different phases. The method comprises rotating the reactor around at least one horizontal axis of rotation, so that an outlet opening in the reactor is lowered below the level of the topmost phase in the reactor, but above the level of the next phase in the reactor. Hence the topmost phase is easily decanted from the reactor and separated. The method then comprises tilting the reactor even further so that the opening is moved below the level of the next phase, which is decanted from the reactor. By increasing the tilt of the reactor in this manner the different phases in the reactor may easily be separated and decanted from the reactor. In another example the products may also be removed from the reactor in other, more conventional ways, such as pumping, tapping etc.

In an eight step 41 the method comprises further after-treatment of the products obtained from the reaction. The products are treated to fulfil technical, economical, or other requirements on the products. In this example the after-treatment comprises purification and separation of the fractions obtained during the re-esterification reaction. In this example the method comprises separation of any non-reacted alcohol from the re-esterified ester phase. In this example, the bio-diesel solves 4% methanol, and the methanol is separated from the bio-diesel through distillation or extraction with for example pure glycerol. In this example the method also comprises adding aluminiumphosphate to the glycerol-fraction, so that any impurities present in the glycerol are precipitated. Hence good-quality glycerol is also obtained from the reaction as a by-product.

In the following two further examples of the invention are described for illustrative purposes only.

### EXAMPLE 1

250 g food animal fat, containing ester compounds in the form of tracylglycerides, was melted in a mixing vessel. The mixture containing the ester compound was pre-treated by adding a preparatory agent in the form of 3.77 g calcined dolomite (magnesiumoxide and calciumoxide). The mixture of food animal fat and the preparatory agent was stirred during 40 min and was left in a heated condition during another 30 min. The mixture was removed from the heat and was allowed to solidify, which took about 10 min. The mixture was heated to 45 °C for a second period lasting 70 min, during which the mixture was stirred occasionally. The mixture was allowed to solidify and rest during 60 min. The mixture was hence pre-treated during a total of 210 min.

The mixture containing the ester compound was heated until melted in a reactor and 43,8 g of a solution of 0,1 % by weight calcium catalyst in methanol was added. A re-esterification reaction was initiated, wherein the triacylglycerol was dissociated and the methanol reacted with the fatty acids to produce a re-esterified diesel oil ester compound, or methylester. After completion 180 g methylester was obtained in a topmost phase. 118 g by-products comprising stearin, glycerol, the Ca-catalyst, and remains of the preparatory agents was also obtained in a lower phase.

### EXAMPLE 2

96.6 g frying fat from a restaurant was mixed with 0.97 g calcined dolomite (magnesiumoxide and calciumoxide) and was pre-treated in a first pre-treatment step for 2 h. The mixture was pre-treated in a second pre-treatment step by addition of 0.22 g hydrated lime, Ca(OH)₂.

21,5 g of a solution of 0,1 % by weight calcium catalyst in methanol was added, and a re-esterification reaction was initiated. The re-esterification reaction proceeded during 18 h at 22 °C, after the completion of which two phases of products were obtained. The topmost phase contained 81 g methylester and the undermost phase contained 5.6 g glycerol and 13.7 g solid particles. The solid particles comprised impurities from the frying fat and remains of the preparatory agents.

The invention is not limited to the examples and embodiments shown, but may be varied freely within the framework of the following claims.

For example, the method may be possible to use for re-esterifiation of other esters than those shown in the examples, such as other triacylglycerides as vegetable oils, or for other kinds of esters as well. The processing equipment may be redesigned in many different ways by a man with ordinary skill in the art. For example the equipment may comprise any additional purification or separation apparatus, mixing vessels for mixing the reactants, and also a separate pre-treatment reactor. The reactor may comprise control equipment, sensors etc. and also different types of feeding or removal arrangements for chemicals, other than the ones shown in the examples. Furthermore, the chemical processing equipment may be designed for continuous processing instead of the batch-process shown in the examples.

## Claims

1. A method of treating a mixture containing at least one ester compound having at least one ester bond, in order to enable a dissociation of the ester bond and a re-esterification of the ester compound, **characterized in that** the method comprises pre-treating the mixture with at least one preparatory agent before initiation of the re-esterification reaction, which preparatory agent is selected from the group consisting of elements from group II of the periodic table and compounds including at least one element from group II of the periodic table, wherein the preparatory agent reduces re-esterification inhibiting effects from impurities in the mixture.

2. A method according to claim 1, **characterized in that** the method comprises pre-treating the mixture with the preparatory agent for at least fifteen minutes, preferably for at least sixty minutes, most preferably for at least ninety minutes, before the initiation of the re-esterification reaction.

3. A method according to claim 1, **characterized in that** at least one preparatory agent is a Lewis base.

4. A method according to claim 1, **characterized in that** at least one preparatory agent is selected from the group consisting of monoxides of an element from group II of the periodic table.

5. A method according to claim 1, **characterized in that** at least one preparatory agent is selected from the group consisting of hydroxides of an element from group II of the periodic table.

6. A method according to claim 1, **characterized in that** the method comprises
- pre-treating the mixture in a first step with a preparatory agent selected from the group of monoxides of an element from group II of the periodic table, and
- pre-treating the mixture in a second step with a preparatory agent selected from the group of hydroxides of an element from group II of the periodic table.

7. A method according to claim 1, **characterized in that** at least one preparatory agent is selected from the group consisting of Calcium and Calcium compounds.

8. A method according to claim 1, **characterized in that** the method comprises
- re-esterification of a triacylglyceride with an alcohol selected from the group consisting of methanol and ethanol.

9. A method according to claim 8, **characterized in that** at least a mayor part of the triacylglycerides is selected from the group consisting of frying oils and animal fats.

10. A method according to any of the previous claims, **characterized in that** the method comprises
- re-esterifying the ester compound in a reactor having an area to volume ratio larger than or equal to 1, preferably larger than or equal to 1.5, and most preferably larger than or equal to 2.

11. A method according to any of the previous claims, **characterized in that** the method comprises
- re-esterifying the ester compound in a reactor, and
- turning the reactor around at least one axis in order to decant the reaction products.

12. A method according to any of the previous claims, **characterized in that** the method comprises
- re-esterification of the ester compound in a temperature between 10 - 60 °C, preferably between 15 - 55 °C, and most preferably between 20 - 50 °C.

13. Chemical processing equipment comprising at least one reactor for treating a mixture containing at least one ester compound having an ester bond, in order to achieve a dissociation of the ester bond and a re-esterification of the ester compound, **characterized in that** the chemical processing equipment is adapted for pre-treatment of the mixture with at least one preparatory agent before initiation of the re-esterification reaction, which preparatory agent is selected from the group consisting of elements from group II of the periodic table and compounds including at least one element from group II of the periodic table, wherein the preparatory agent reduces re-esterification inhibiting effects from impurities in the mixture.

14. Chemical processing equipment according to claim 13, **characterized in that** the reactor is shaped with an area to volume ratio larger than or equal to 1, preferably larger than or equal to 1.5, and most preferably larger than or equal to 2.

15. Chemical processing equipment according to claim 13 or 14, **characterized in that** the reactor is designed to be turnable around at least one horizontal axis, in order to enable decantation of the reaction products.

16. Chemical processing equipment according to any of the claims 13 - 15, **characterized in that** the reactor is adapted to maintain the mixture in a temperature 10 - 60 °C, preferably between 15 - 55 °C, and most preferably between 20 - 50 °C, during the re-esterification reaction.

17. A mixture containing at least one ester compound having at least one ester bond, **characterized in that** the mixture further comprises a preparatory agent selected from the group consisting of elements from group II of the periodic table and compounds including at least one element from group II of the periodic table, wherein the preparatory agent reduces re-esterification inhibiting effects from impurities.

18. A mixture according to claim 17, **characterized in that** the mayor part of the mixture contains an ester compound selected from the group consisting of frying oils and animal fats.

19. A mixture according to claim 17 or 18, **characterized in that** at least one preparatory agent is selected from the group consisting of CaO and Ca(OH)₂.

20. A composition of ester compounds, wherein the ester compounds contain an alcohol selected from the group of methanol and ethanol, and an acid selected from the group of fatty acids, **characterized in that** the composition of ester compounds is obtained from re-esterification of esters selected from the group of animal fats and frying oils, with the alcohol selected from the group of methanol and ethanol.
